# EUROPÄISCHE PATENTSCHRIFT

(11) **EP 0 919 420 B1**
(45) Veröffentlichungstag und Bekanntmachung des Hinweises auf die Patenterteilung: **05.09.2001**
(21) Anmeldenummer: 99104541.0
(22) Anmeldetag: 06.07.1996
(51) Int. Cl.: B60K 35/00, G01D 7/00, B60K 31/00

(54) **Kombinationsinstrument**
Combined instrument
Instrument combiné

(30) Priorität: 10.08.1995 DE 19529390
(43) Veröffentlichungstag der Anmeldung: 02.06.1999
(62) Teilanmeldung aus: 96110938.6
(73) Patentinhaber: Mannesmann VDO Aktiengesellschaft, 60388 Frankfurt am Main (DE)
(72) Erfinder: Abel, Heinz-Bernhard Dr., 63762 Grossostheim (DE); Hähl, Manfred, 63165 Mühlheim (DE)
(74) Vertreter: Klein, Thomas, Dipl.-Ing. (FH)

(56) Entgegenhaltungen:
- DE-A- 3 706 627
- DE-A- 4 313 530
- DE-A- 4 321 146
- DE-A- 4 325 721
- US-A- 4 761 715
- US-A- 5 353 735
- PATENT ABSTRACTS OF JAPAN vol. 12, no. 473 (P-799), 12. Dezember 1988 -& JP 63 193012 A (KANTO SEIKI), 10. August 1988

## Beschreibung

Die Erfindung betrifft ein Kombinationsinstrument mit einer Anzeigeebene, deren Anzeigebereich eine Skala aufweist, sowie mit einem Zeiger.

Es sind aus der DE-A-4 313 530 Kombinationsinstrumente für den Einsatz insbesondere in Kraftfahrzeugen bekannt, die mit Analoginstrumenten ausgestattet sind. Sie dienen beispielsweise der Geschwindigkeitsanzeige des Kraftfahrzeuges oder der Anzeige mehrerer unabhängiger Werte. Die Kombinationsinstrumente weisen eine diffuse Lichtleitplatte auf, deren beobachterseitige Fläche die Anzeigeebene bildet. Im Anzeigebereich der Anzeigeebene ist eine Skala aufgedruckt. Der Zeiger wird durch eine mittels einer Antriebseinheit bewegliche Lichtquelle dargestellt, deren Lichtstrahl in die Lichtleitplatte eingespeist wird. Nachteilig ist bei diesem Kombinationsinstrument, daß wegen der Darstellung des Zeigers innerhalb des Diffusors, somit beabstandet zur Anzeigeebene, die Ablesung der Anzeige mit Parallaxe behaftet ist. Abgesehen hiervon treten über die Zeigerlänge, das heißt mit zunehmendem Abstand von der Lichtquelle, Lichtverluste auf, mit der Konsequenz, daß der Zeiger über dessen Länge unterschiedlich stark leuchtet.

Es sind darüber hinaus aus der DE-A-4 321 146 Kombinationsinstrumente bekannt, die Anzeigefelder, beispielsweise als Bestandteil von LC-Bildschirmen aufweisen, die von einem mechanischen Zeiger eines Bestandteil des Kombinationsinstrumentes bildenden Analoginstrumentes teilweise überdeckt werden. Hierdurch ist die Ables- und Erkennbarkeit des Anzeigefeldes beschränkt. Mittels derartiger LC-Bildschirme können dem Fahrer die unterschiedlichsten Informationen mitgeteilt werden.

Aus der DE-A-4 325 721 ist es bekannt, eine Geschwindigkeitsregelungsmarke durch an der Skala eines Tachometers angebrachte Dioden anzuzeigen.

Aus der US-A-4 761 715 ist ferner ein Instrument bekannt, dessen Zeiger durch schwenkbare Laserstrahlen gebildet sind, die auf die diffuse Oberfläche einer Anzeigeebene gerichtet werden. Ein Strahlteiler ist zum Bilden zweier Laserstrahlen vorgesehen, die einzeln schwenkbar auf zwei Skalen verschiedene Werte anzeigen.

Vor diesem Hintergrund ist es die Aufgabe der vorliegenden Erfindung, ein Kombinationsinstrument so weiterzubilden, daß bei einem Kraftfahrzeug mit Geschwindigkeitsregelung auf der gleichen Skala die Geschwindigkeit und die Geschwindigkeitsregelung smarke ohne Parallaxen fehler angezeigt werden können.

Die Aufgabe wird durch die Merkmale des Anspruchs 1 gelöst.

Ein Strahlteiler ist zum Bilden zweier Laserstrahlen vorgesehen. Mittels einer Laserdiode lassen sich damit zwei Teilstrahlen erzeugen, wobei vorgesehen ist, einen Laserstrahl für die Geschwindigkeitsanzeige, den anderen Laserstrahl für eine Marke zwecks Angabe der vorgegebenen Geschwindigkeit einer Geschwindigkeitsregelung zu verwenden.

Da der Zeiger unmittelbar dort abgebildet wird, wo der Laserstrahl auf die diffuse Oberfläche der Anzeigeebene trifft, in der auch die Skala angeordnet ist, ist ein parallaxefreies Ablesen des Anzeigeinstrumentes möglich. Durch Vorgabe der Geometrie der diffusen Oberfläche kann in Abhängigkeit von der Winkelposition des Laserstrahles die Länge des Zeigers variabel sein. Dies erfolgt dadurch, daß nur das an der diffusen Oberfläche diffus reflektierte Licht in das Auge des Betrachters der Anzeige fällt, während das auf das grafische Anzeigefeld auftreffende Licht des Laserstrahls unter einem dem Einfallswinkel entsprechenden Ausfallswinkel in einen Bereich reflektiert wird, der nicht dem Augenbereich des Betrachters entspricht. Der Zeiger kann damit über ein im Anzeigebereich des Kombinationsinstrumentes angeordnetes grafisches Anzeigefeld geführt werden, ohne für den Betrachter störend zu sein.

Vorteilhaft ist eine Blende vorgesehen, die im Strahlengang des von der Anzeigeebene im Bereich des grafischen Anzeigefeldes reflektierten Laserstrahles angeordnet ist. Durch die geometrische Auslegung der Strahlenverläufe fallen die gerichtet reflektierten Strahlen auf diese Blende, wodurch der Laserzeiger über dem LC-Bildschirm nicht sichtbar ist.

Gemäß einer besonderen Ausführungsform der Erfindung ist vorgesehen, daß der Laserstrahl hinter der Anzeigeebene erzeugt wird. Dies ermöglicht es, das Kombinationsinstrument äußerst kompakt zu bauen, unter Verwendung von mehreren Umlenkprismen, die den Laserstrahl vor die Anzeigeebene umleiten, und dort unter einem flachen Winkel, der beispielsweise zwischen 5 und 20° zur Anzeigeebene beträgt, auf diese hin richten. Insbesondere für den Fall, daß der Laserstrahl hinter der Anzeigeebene erzeugt wird, wird es als vorteilhaft angesehen, wenn das Kombinationsinstrument eine transparente Platte aufweist, deren den Betrachter zugewandte Fläche die Anzeigeebene bildet, wobei die Platte im Skalenbereich eine aufgerauhte Oberfläche aufweist, die die Abbildung des Laserstrahls ermöglicht. In diesem Fall durchsetzt der Laserstrahl zweckmäßig die transparente Platte in ihrem nicht aufgerauhten Bereich, um vor der Anzeigeebene im Sinne der Auflichttechnik in Richtung der Anzeigeebene umgelenkt zu werden.

Der Strahlteiler ist mittels eines, die aktuelle Geschwindigkeit wiedergebenden Antriebes drehbar. Der sich im Strahlteiler in Längsrichtung ausbreitende Laserstrahl wird zweckmäßig durch ein Prisma umgelenkt, das vorteilhaft über einen geeigneten Antrieb drehbar ist. Aufgrund der Drehbarkeit des Prismas und damit der Verschwenkbarkeit des Laserstrahles für die Marke der Geschwindigkeitsregelung ist eine Veränderung der Markierung der Geschwindigkeitsbegrenzungsregelung möglich.

Durch eine lokale Erhöhung des Reflexionsvermögens der diffusen Oberfläche ist eine weitere Markierung möglich, beispielsweise bei Erreichen der zulässigen Höchstgeschwindigkeit in Ortschaften bei 50 km/h. Diese optische Markierung wird erst durch Überstreichen des Laserzeigers in Form einer Aufhellung an dieser Stelle sichtbar. Es ist damit eine Markierung in Form der lokalen Aufhellung ohne eine zusätzliche Lichtquelle möglich.

Es ist schließlich denkbar, insbesondere durch zusätzlich in den Strahlengang eingeführte Linsen, eine geometrische Variation in der Zeigerbreite und Zeigerform sowie der Marke für die Geschwindigkeitsbegrenzungsregelung zu erreichen.

Weitere Merkmale der Erfindung sind in den Unteransprüchen sowie der Beschreibung der Figuren und den Figuren selbst dargestellt, wobei bemerkt wird, daß alle Einzelmerkmale und alle Kombinationen von Einzelmerkmalen erfindungswesentlich sind.

In den Figuren ist die Erfindung anhand eines Ausführungsbeispieles näher erläutert, ohne auf dieses beschränkt zu sein. Es stellt dar:
- Figur 1: bei einem Kombinationsinstrument unter Verwendung eines LC-Bildschirmes die prinzipielle Anordnung der Bauteile zur Erzeugung und Abbildung des Laserzeigers und der Marke für die Geschwindigkeitsregelung,
- Figur 2: eine schematische Darstellung des Kombinationsinstrumentes von der Betrachterseite aus gesehen.

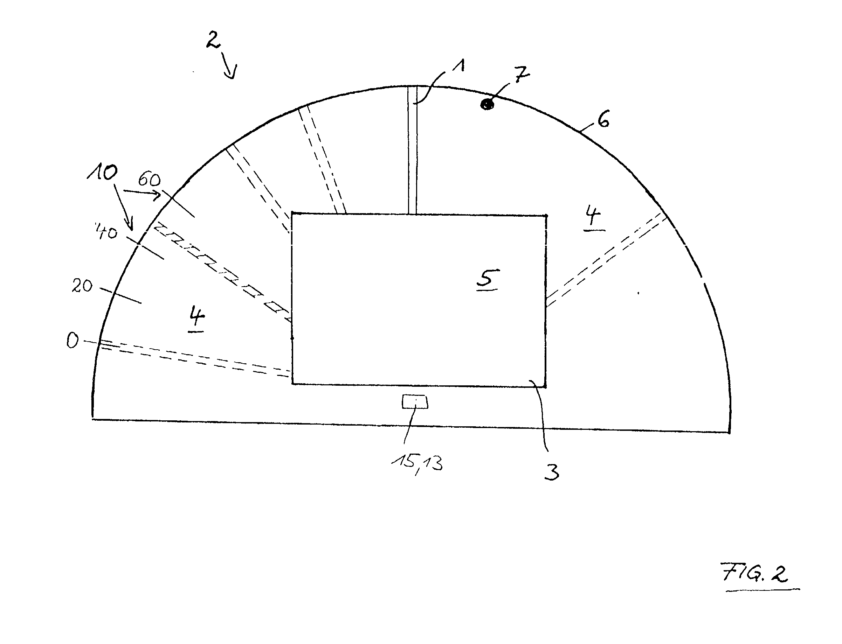

Die Anzeigekomponenten des Kombinationsinstrumentes mit Laserzeiger 1 bestehen aus einem Analogtachometer 2 und einem rechteckigen LC-Bildschirm 3, der sowohl grafische als auch Videoinformationen darzustellen erlaubt. Die Zifferblattoberfläche 4, das heißt grundsätzlich derjenige Bereich, der den Bildschirm 3 umgibt, ist diffus reflektierend, was für die Auflichtprojektion des Laserzeigers 1 ausgenutzt wird. An dem Anzeigefeld 5 wird der auftreffende Teil des Laserstrahls unter einem dem Einfallswinkel entsprechenden Ausfallswinkel reflektiert. Durch die geometrische Auslegung der Strahlenverläufe fallen die von dem Anzeigefeld 5 gerichtet reflektierten Strahlen auf eine entlang eines Kreisabschnittes angeordnete Blende 6, wodurch der Laserzeiger 1 über dem LC-Bildschirm 3 nicht sichtbar ist. Die Zifferblattgeometrie liefert somit bei einer Winkelverstellung einen längenvariablen Zeiger 1. Diverse Zeigerlängen sind für unterschiedliche Geschwindigkeiten (zum Beispiel 0 km/h, 50 km/h usw.) in Figur 2 mit gestrichelten Linien verdeutlicht.

Durch eine lokale Erhöhung des Reflexionsvermögens der Zifferblattoberfläche 4 ist eine Markierung zum Beispiel der zulässigen Höchstgeschwindigkeit in Ortschaften - 50 km/h - möglich, was in Figur 2 durch die entsprechende Schraffur bei der genannten Geschwindigkeitsanzeige zum Ausdruck kommt. Die optische Markierung wird erst durch Überstreichen des Laserzeigers 1 in Form einer Aufhellung an dieser Stelle sichtbar.

Schließlich ist durch Teilung des Laserstrahles unabhängig von der Bewegung des Laserzeigers 1 eine Marke für die Geschwindigkeitsregelung darstellbar, wie es durch den Punkt 7 veranschaulicht ist.

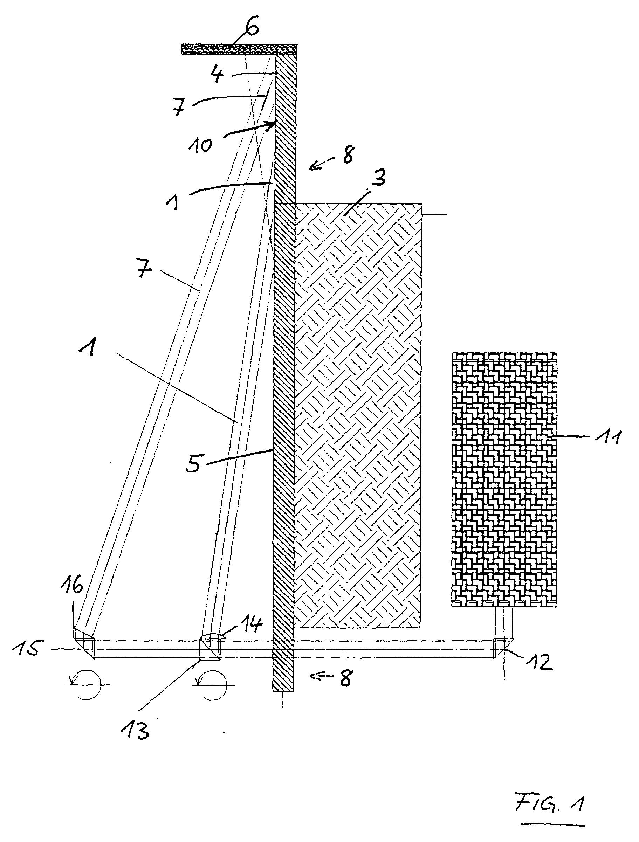

Das technische Prinzip des Laserzeigers 1 und der Marke 7 in Verbindung mit dem LC-Bildschirm 3 ist in Figur 1 wiedergegeben. Diese zeigt eine Glasplatte 8 mit dem dahinter angeordneten LC-Bildschirm 3. Die dem Betrachter zugewandte Fläche der Glasplatte 8 bildet die Anzeigeebene 9, die sich unterteilt in das dem LC-Bildschirm zugeordnete Anzeigefeld 5 und die diese umgebende Zifferblattoberfläche 4 mit der Skala 10. Die diffus reflektierende Zifferblattoberfläche 4 ist erzeugt durch Aufrauhen der Glasplatte 8 in diesem Bereich, beispielsweise durch Sandstrahlen, Ätzen oder dergleichen.

Der von einer hinter der Glasplatte 8 angeordneten Laserdiode 11 abgegebene Lichtstrahl (Lambda = 635 nm) fällt auf ein Umlenkprisma 12 und durchdringt einen nicht diffusen Bereich der Glasplatte 8 unterhalb des LC-Bildschirmes 3. Vor der Anzeigeebene 9 befindet sich im Strahlengang des die Glasplatte 8 durchsetzenden Laserstrahles ein Strahlteiler 13, wodurch eine Strahlteilung für den Laserzeiger 1 und die Marke 7 zum Anzeigen der Geschwindigkeitsregelung entsteht. Der unter einem Winkel von etwa 90° zur Ausbreitungsrichtung umgelenkte Strahl wird durch eine Zylinderlinse 14 in eine Linienform überführt und als Laserzeiger 1 auf das Zifferblatt geworfen. Zur Realisierung der separaten Markierung für die Geschwindigkeitsregelung auf der Zifferblattoberfläche wird der sich in Längsrichtung ausbreitende Strahl durch ein Umlenkprisma 15 um nahezu 90° nach oben abgelenkt. Ein geeignetes Umlenkprisma 16 bildet den Laserstrahl in Form der punktförmigen Marke 7 auf die Zifferblattoberfläche ab.

Die beiden Umlenkprismen 12 und 15 sowie der Strahlteiler 13 sind auf einer Achse angeordnet. Jedoch sind das Umlenkprisma 15 und der Stahlteiler 13 unabhängig voneinander drehbar gelagert. Deren Winkelverstellung erfolgt jeweils über geeignete Antriebe zwecks Darstellung der jeweiligen Geschwindigkeit bzw. der vorgegebenen, variablen Geschwindigkeit mittels der Marke 7.

## Patentansprüche

1. Kombinationsinstrument mit einer Anzeigeebene (4, 5), deren Anzeigebereich eine Skala (10) aufweist, sowie mit einem Zeiger (1), wobei die Anzeigeebene (4, 5) im Anzeigebereich der Skala (10) als diffuse Oberfläche (4) ausgebildet ist, sowie der Zeiger (1) durch einen schwenkbaren Laserstrahl gebildet ist, der unter einem Winkel in Auflichttechnik auf die diffuse Oberfläche (4) gerichtet wird, wobei ein Strahlteiler (13) zum Bilden zweier Laserstrahlen vorgesehen ist, wobei im Anzeigebereich der Skala (10) der eine Laserstrahl als der Zeiger (1) der Geschwindigkeitsanzeige und der andere Laserstrahl (7) als Geschwindigkeitsregelungsmarke dient.

2. Instrument nach Anspruch 1, **dadurch gekennzeichnet**, daß der Anzeigebereich ferner ein Anzeigefeld (5) aufweist, an dem der darauf auftreffende Laserstrahl unter einem etwa dem Einfallswinkel entsprechenden Ausfallswinkel reflektiert wird.

3. Instrument nach Anspruch 2, **dadurch gekennzeichnet**, daß das Anzeigefeld (5) einem LC-Bildschirm (3) zugeordnet ist.

4. Instrument nach Anspruch 2 oder 3, **dadurch gekennzeichnet**, daß eine Blende (6) vorgesehen ist, die im Strahlengang des von dem Anzeigefeld (5) reflektierten Laserstrahles angeordnet ist.

5. Instrument nach einem der vorhergehenden Ansprüche, **dadurch gekennzeichnet,** daß es eine transparente Platte (8) aufweist, deren dem Betrachter zugewandte Fläche die Anzeigeebene (4, 5) bildet, wobei die Platte (8) im Skalenbereich eine aufgerauhte Oberfläche (4) aufweist.

6. Instrument nach einem der vorhergehenden Ansprüche, **dadurch gekennzeichnet,** daß eine Laserdiode (11) zum Erzeugen des Laserstrahls hinter der Anzeigeebene (4, 5) angeordnet ist.

7. Instrument nach Anspruch 6, **dadurch gekennzeichnet,** daß der Laserstrahl die transparente Platte (8) in ihrem nicht aufgerauhten Bereich durchsetzt.

8. Instrument nach einem der vorhergehenden Ansprüche, **dadurch gekennzeichnet,** daß der Strahlteiler (13) drehbar ist.

9. Instrument nach einem der vorhergehenden Ansprüche, **dadurch gekennzeichnet,** daß der sich im Strahlteiler (13) in Längsrichtung ausbreitende Laserstrahl durch ein Prisma (15) umgelenkt wird.

10. Instrument nach Anspruch 9, **dadurch gekennzeichnet,** daß das Umlenkprisma (15) drehbar ist.

11. Instrument nach einem der Ansprüche 8 bis 10, **dadurch gekennzeichnet,** daß der Strahlteiler (13) und das Umlenkprisma (15) unabhängig voneinander drehbar sind.

12. Instrument nach einem der vorhergehenden Ansprüche, **dadurch gekennzeichnet,** daß die diffuse Oberfläche (4) in Teilbereichen ein gegenüber dem Restbereich der diffusen Oberfläche (4) verändertes Reflexionsvermögen besitzt.

## Claims

1. Combination instrument with a display plane (4, 5), the display area of which has a scale (10), and with a pointer (1), the display plane (4, 5) being designed as a diffuse surface (4) in the display area of the scale (10), and the pointer (1) being formed by a pivotable laser beam which is directed at the diffuse surface (4) at an angle by front-side illumination, a beam splitter (13) being provided for the purpose of forming two laser beams, the one laser beam being used in the display area of the scale (10) as the pointer (1) for indicating the speed and the other laser beam (7) being used as a speed-control marker.

2. Instrument according to claim 1, **characterized in that** the display area furthermore has a display panel (5) at which the laser beam that strikes it is reflected at a reflection angle corresponding approximately to the angle of incidence.

3. Instrument according to Claim 2, **characterized in that** the display panel (5) is associated with a LC screen (3).

4. Instrument according to Claim 2 or 3, **characterized in that** a cover (6) is provided, being arranged in the beam path of the laser beam reflected by the display panel (5).

5. Instrument according to one of the preceding claims, **characterized in that** it has a transparent plate (8), that surface of which that faces the observer forms the display plane (4, 5), the plate (8) having a roughened surface (4) in the scale area.

6. Instrument according to one of the preceding claims, **characterized in that** a laser diode (11) is provided to generate the laser beam behind the display plane (4, 5).

7. Instrument according to Claim 6, **characterized in that** the laser beam passes through the transparent plate (8) in its unroughened area.

8. Instrument according to one of the preceding claims, **characterized in that** the beam splitter (13) is rotatable.

9. Instrument according to one of the preceding claims, **characterized in that** the laser beam, which propagates in the longitudinal direction in the beam splitter (13), is deviated by a prism (15).

10. Instrument according to Claim 9, **characterized in that** the deviating prism (15) is rotatable.

11. Instrument according to one of Claims 8 to 10, **characterized in that** the beam splitter (13) and the deviating prism (15) can be rotated independently of one another.

12. Instrument according to one of the preceding claims, **characterized in that** some areas of the diffuse surface (4) have a different reflection capacity from the remaining area of the diffuse surface (4).

## Revendications

1. Instrument combiné muni d'un plan d'affichage (4, 5) dont la zone d'affichage présente une graduation (10) et muni d'une aiguille (1), le plan d'affichage (4, 5) dans la zone d'affichage de la graduation (10) étant réalisé sous la forme d'une surface diffuse (4), et l'aiguille (1) étant formée par un rayon laser orientable qui est dirigé sur la surface diffuse (4) sous un certain angle en technique de lumière incidente, une lame séparatrice (13) étant prévue pour former deux rayons laser, l'un des rayons laser faisant office d'aiguille (1) d'indication de la vitesse et l'autre rayon laser (7) faisant office de repère de régulation de la vitesse dans la zone d'affichage de la graduation (10).

2. Instrument selon la revendication 1, **caractérisé en ce que** la zone d'affichage présente en plus un champ d'affichage (5) sur lequel est réfléchi le rayon laser qui le rencontre sous un angle de réflexion qui correspond à peu près à l'angle d'incidence.

3. Instrument selon la revendication 2, **caractérisé en ce que** le champ d'affichage (5) est associé à un écran à cristaux liquides (3).

4. Instrument selon la revendication 2 ou 3, **caractérisé en ce qu**'il est prévu un obturateur (6) qui est disposé dans le trajet du rayon laser réfléchi par le champ d'affichage (5).

5. Instrument selon l'une des revendications précédentes, **caractérisé en ce que** qu'il présente une plaque transparente (8) dont la surface qui fait face à l'observateur forme le plan d'affichage (4, 5), la plaque (8) présentant une surface rugueuse (4) dans la zone de la graduation.

6. Instrument selon l'une des revendications précédentes, **caractérisé en ce qu**'une diode laser (11) est disposée derrière le plan d'affichage (4, 5) pour générer le rayon laser.

7. Instrument selon la revendication 6, **caractérisé en ce que** le rayon laser traverse la plaque transparente (8) dans sa zone non rugueuse.

8. Instrument selon l'une des revendications précédentes, **caractérisé en ce que** la lame séparatrice (13) est pivotante.

9. Instrument selon l'une des revendications précédentes, **caractérisé en ce que** le rayon laser qui s'élargit dans le sens longitudinal dans la lame séparatrice (13) est dévié par un prisme (15).

10. Instrument selon la revendication 9, **caractérisé en ce que** le prisme de déviation (15) est pivotant.

11. Instrument selon l'une des revendications 8 à 10, **caractérisé en ce que** la lame séparatrice (13) et le prisme de déviation (15) sont pivotants indépendamment l'un de l'autre.

12. Instrument selon l'une des revendications précédentes, **caractérisé en ce que** la surface diffuse (4) possède dans des zones partielles un pouvoir de réflexion modifié par rapport au reste de la surface diffuse (4).
